# FASCICULE DE BREVET EUROPEEN

(11) **EP 2 002 613 B1**
(45) Date de publication et mention de la délivrance du brevet: **27.01.2010**
(21) Numéro de dépôt: 07731846.7
(22) Date de dépôt: 29.03.2007
(51) Int. Cl.: H04W 84/20, H04L 12/56, H04L 29/12

(54) **Procédé pour organiser un réseau d'objets communicants, et objet communicant pour la mise en oeuvre du procédé**
Verfahren zum Organisieren eines Netzwerks kommunizierender Objekte und Kommunikationsobjekt zur Durchführung des Verfahrens
Method for organising a network of communicating objects, and communicating object for the implementation of the method

(30) Priorité: 31.03.2006 FR 0651143
(43) Date de publication de la demande: 17.12.2008
(73) Titulaire: FRANCE TELECOM, 75015 Paris (FR)
(72) Inventeur: LU, Jia-Liang, Beijing 10044 (CN); DOHLER, Michael, F-38000 Grenoble (FR); BARTHEL, Dominique, F-38190 Bernin (FR); VALOIS, Fabrice, F-69007 Lyon (FR)
(86) Numéro de dépôt international: PCT/FR2007/051042
(87) Numéro de publication internationale: WO 2007/113442

(56) Documents cités:
- US-A1- 2002 045 423

## Description

L'invention concerne un procédé pour organiser un réseau d'objets communicants.

Un réseau d'objets communicants est formé par une pluralité d'entités communicantes aptes à communiquer entre elles directement d'une manière ad hoc, sans passer par l'intermédiaire d'une station de base ou d'un serveur centralisé, généralement par des technologies de communication sans fil à bas coût. Il peut s'agir d'objets communicants statiques (ordinateur de bureau) ou bien mobiles (ordinateur portable, PDA, capteur, téléphone mobile, etc.). Un tel réseau peut se créer de manière spontanée et ne possède pas de topologie définie au préalable. Ni serveurs d'adresses, ni routeurs ne sont préconfigurés pour l'allocation d'adresses et le routage des messages. Après son déploiement, le réseau d'objets s'auto-configure et s'auto-organise de manière dynamique, lors d'une phase de mise en place des communications. A titre d'exemples non limitatifs de tels réseaux, on peut citer des réseaux de capteurs ou encore les réseaux domestiques.

L'auto-configuration du réseau vise notamment à allouer des adresses aux noeuds du réseau, alors que l'auto-organisation vise à organiser l'infrastructure du réseau, à le structurer, en définissant les rôles respectifs des différents noeuds du réseau, dans le but d'améliorer l'efficacité des communications et de faciliter la mise en oeuvre des services. Le préfixe "auto" fait référence à un processus exécuté par les noeuds du réseau eux-mêmes, sans intervention d'une source extérieur au réseau. L'auto-configuration et l'auto-organisation sont deux mécanismes distincts. Ordinairement, l'auto-configuration précède l'auto-organisation : lorsqu'un réseau se forme, dans un premier temps, les noeuds mettent en oeuvre un algorithme d'allocation dynamique d'adresses pour configurer leurs interfaces réseau puis, dans un second temps, ils participent à une organisation générale du réseau, le plus souvent basée sur les adresses préalablement configurées.

Le mécanisme d'allocation d'adresses doit avant tout garantir l'unicité de chacune des adresses de noeud dans tout le réseau. Il existe différents approches pour l'allocation d'adresses dans un réseau d'objets communicants. L'une des ces approches, décrite dans les documents P. Patchipulusu. Dynamic address allocation protocoles for mobile ad hoc networks. Master's thesis, Texas A&M University, 2001*,* et Y. Sun and E. Belding-Royer. Dynamic address configuration, in mobile ad hoc- networks. Technical Report, University of California, June 2003*,* est basée sur des noeuds leaders : un ou plusieurs noeuds leaders du réseau sont en charge de l'allocation ou de l'enregistrement des adresses et assurent l'unicité des adresses dans tout le réseau. En cas de pluralité de noeuds leaders, ces derniers synchronisent d'une manière distribuée l'information sur les adresses allouées et/ou sur celles disponibles.

Dans un réseau ad-hoc d'objets communicants, le protocole d'auto-organisation doit être implémenté d'une manière distribuée sur les noeuds. Chaque noeud prend une décision locale après avoir collecté des informations locales. Ces décisions locales débouchent sur une organisation globale ayant les propriétés souhaitées. Il existe en particulier des protocoles d'auto-organisation basés sur la constitution de "clusters", autrement dit de groupes de communication. Dans chaque groupe, un chef de groupe a la charge de fonctionnalités spécifiques pour tous les objets communicants du groupe. Généralement, le chef de groupe élu correspond à celui ayant l'identifiant le plus bas, comme cela est décrit dans le document A. Ephremides, J. Wieselthier and D. Baker. A design concept for reliable mobile radio networks with frequency hopping signalling. Proc of the IEEE, 75(1):56-73, 1987*.* Ce type de protocole d'auto-organisation nécessite donc que l'auto-configuration ait été effectuée avant que tous les noeuds lancent l'élection des chefs de groupe dans le réseau. On connait également des systèmes dans lesquels l'auto-configuration est hiérachique, tel celui exposé dans le document US 2005/0045423.

La mise oeuvre de la phase initiale d'auto-configuration et d'auto-organisation d'un réseau d'objets communicants nécessite l'émission et la réception par ces derniers, le plus souvent par la voie des airs, d'une importante quantité de données. Cela s'accompagne d'une grosse dépense énergétique. A titre d'exemple illustratif, certains capteurs consomment jusqu'à la moitié de leur batterie lors de cette phase initiale. Le point critique dans le développement des réseaux d'objets communicants réside essentiellement dans la longévité énergétique des objets communicants. L'une des voies d'essor des réseaux d'objets communicants passe par conséquent par le développement et l'utilisation de mécanismes d'auto-configuration et d'auto-organisation moins gourmands en électricité, dans le but d'accroître l'autonomie énergétique des objets communicants. C'est ce que propose la présente invention.

A cet effet, l'invention concerne un procédé pour organiser un réseau d'objets communicants, en au moins une partition comportant une pluralité de cellules de communication respectivement couvertes par une pluralité de noeuds leaders aptes à communiquer entre eux, le réseau disposant d'un ensemble d'adresses à allouer scindé en une pluralité de pools d'adresses destinés à être gérés de façon distribuée par les noeuds leaders du réseau, procédé dans lequel, lorsqu'un nouveau noeud arrive dans le réseau, le procédé comprend une phase a) de détection de noeud leader suivie, le cas échéant, d'une phase b) de détection de noeud membre, telles que :
- durant la phase a), si le nouveau noeud détecte dans son voisinage un noeud leader, ledit noeud leader lui alloue une adresse extraite d'un pool d'adresses du'il gère et le nouveau noeud prend le rôle de noeud membre dans la cellule du noeud leader, les messages en provenance ou à destination d'un noeud membre appartenant à une cellule donnée étant destinés à transiter par l'intermédiaire du noeud leader couvrant ladite cellule;
- si le nouveau noeud ne détecte pas de noeud leader dans son voisinage, il passe à la phase b),
- durant la phase b), si le nouveau noeud détecte dans son voisinage un noeud membre appartenant à une première cellule, il prend le rôle de leader couvrant une deuxième cellule, obtient un pool disponible d'adresses à gérer et s'alloue l'une des adresses dudit pool obtenu

Le procédé de l'invention permet de mettre en place une structure virtuelle de réseau d'objets communicants basée sur des noeuds leaders, disposant et gérant chacun au moins un pool d'adresses, et sur des noeuds membres attachés à ces noeuds leaders.
Chaque nouveau noeud arrivant dans le réseau découvre son voisinage puis, en fonction de son voisinage, détermine localement son rôle et obtient une adresse. La consommation d'énergie d'un noeud est ainsi grandement réduite lors de la phase d'auto-configuration et d'auto-organisation : il suffit au noeud de détecter si un noeud leader est présent dans son voisinage, par exemple en observant la réception d'un message de leader diffusé régulièrement par celui-ci, et, dans le cas où le nouveau noeud n'est pas dans la zone de couverture d'un noeud leader, de détecter si un noeud membre est présent dans le voisinage du nouveau noeud, pour en déduire à la fois son adresse et son rôle (leader ou membre). Grâce à l'invention, l'auto-configuration et l'auto-organisation ne sont plus deux mécanismes séparés, exécutés successivement, mais sont fusionnées en un seul mécanisme : dès qu'un nouveau noeud arrive dans le réseau, il obtient à la fois une adresse et un rôle (leader ou membre), autrement dit il s'auto-configure et s'auto-organisme en exécutant un seul mécanisme. Les opérations d'auto-configuration et d'auto-organisation sont réalisées conjointement, autrement dit sont fusionnées en un seul mécanisme. Quand le nouveau noeud arrive dans le réseau, il tire partie de la connaissance de son voisinage pour décider localement de son rôle (leader ou membre) dans la structure et obtenir son adresse suivant son rôle et sa localisation.

Avantageusement, le noeud membre détecté par le nouveau noeud dans son voisinage durant la phase b) devient un noeud passerelle entre les deux noeuds leaders des première et deuxième cellules voisines, lesdits noeuds leaders étant destinés à communiquer entre eux par l'intermédiaire du noeud passerelle.

Ainsi, lorsqu'un noeud membre appartenant à une première cellule couverte par un leader détecte l'arrivée d'un nouveau noeud leader couvrant une deuxième cellule voisine, il prend également le rôle de passerelle entre les deux noeuds leaders afin d'assurer la communication entre ces deux noeuds leaders par son intermédiaire.

Avantageusement encore, si ledit nouveau noeud ne détecte ni noeud leader, ni noeud membre dans son voisinage durant les phases a) et b) respectivement, la phase b) est suivie d'une phase c) durant laquelle le nouveau noeud s'attribue un pool d'adresses à gérer, prend le rôle de premier noeud leader d'une nouvelle partition de réseau et attribue un identifiant à ladite partition. De préférence, pour déterminer l'identifiant de la nouvelle partition, ledit premier noeud leader génère un nombre de façon aléatoire. Si l'identifiant d'une partition est codé sur un nombre x suffisamment grand, le risque de conflit entre deux identifiants respectifs de deux partitions distinctes est négligeable. La génération aléatoire des nombres permet ainsi de générer très facilement des identifiants distincts pour les différents partitions qui se créent, sans qu'il soit nécessaire pour une nouvelle partition de connaître les identifiants des partitions existantes.

Dans un mode de réalisation particulier, durant la phase a), le nouveau noeud observe la réception d'un message régulièrement diffusé par les noeuds leaders afin de détecter la présence d'un noeud leader dans son voisinage, et, durant la phase b), le nouveau noeud diffuse à destination de son voisinage un message de sollicitation d'un noeud membre et observe la réception d'un message d'annonce de noeud membre. Ainsi, dans un premier temps, un nouvel objet arrivant dans le réseau écoute s'il reçoit un message diffusé régulièrement par les noeuds leaders puis, dans un second temps, s'il ne reçoit pas un tel message de leader, il sollicite un noeud membre. Grâce à cela, les dépenses énergétiques des noeuds existants du réseau ainsi que celles des noeuds arrivant dans le réseau sont fortement réduites.

L'invention concerne également un objet communicant apte à intégrer un réseau d'objets communicants, comprenant
■ des premiers moyens fonctionnels aptes à assurer un rôle de leader couvrant une cellule de communication, un noeud leader étant chargé d'allouer des adresses d'un pool d'adresses aux noeuds situés dans sa cellule et de router les messages en provenance ou à destination de noeuds membres appartenant à sa cellule;
■ des seconds moyens fonctionnels aptes à assurer un rôle de membre dans une cellule couverte par un noeud leader,
■ des premier moyens de configuration, pour mettre en oeuvre une phase a) de détection de noeud leader, agencés pour
   - détecter si un noeud leader est présent dans le voisinage de l'objet, et,
   - en cas de détection d'un noeud leader voisin, obtenir une adresse auprès dudit noeud leader et déclencher l'activation des seconds moyens fonctionnels,
■ des seconds moyens de configuration, pour mettre en oeuvre une phase b) de détection de noeud membre, agencés pour
   - détecter si un noeud membre est présent dans le voisinage de l'objet, et
   - en cas de détection d'un noeud membre voisin, obtenir un pool d'adresses à gérer, s'allouer une adresse dudit pool et
      déclencher l'activation des premiers moyens fonctionnels, les seconds moyens de configuration étant destinés à être mis en oeuvre après les premiers moyens de configuration, dans le cas où l'objet n'a pas détecté de noeud leader dans son voisinage.

L'invention concerne enfin un réseau d'objets communicants comportant une pluralité d'objets tels que précédemment définis, formant au moins une partition.

L'invention sera mieux comprise à l'aide de la description suivante d'un mode de réalisation particulier du procédé, du noeud et du réseau de l'invention, en référence aux dessins annexés sur lesquels :
la figure 1 représente un réseau d'objets communicants obtenu par le procédé de l'invention;
- la figure 2 représente un organigramme de différentes étapes du mode de réalisation particulier décrit du procédé de l'invention;
- la figure 3 représente la décomposition en pools de l'ensemble des adresses du réseau et l'affectation d'une partie de ces pools à différents noeuds leaders du réseau;
- les figures 4A et 4B représentent l'arrivée d'un nouveau noeud membre dans le réseau;

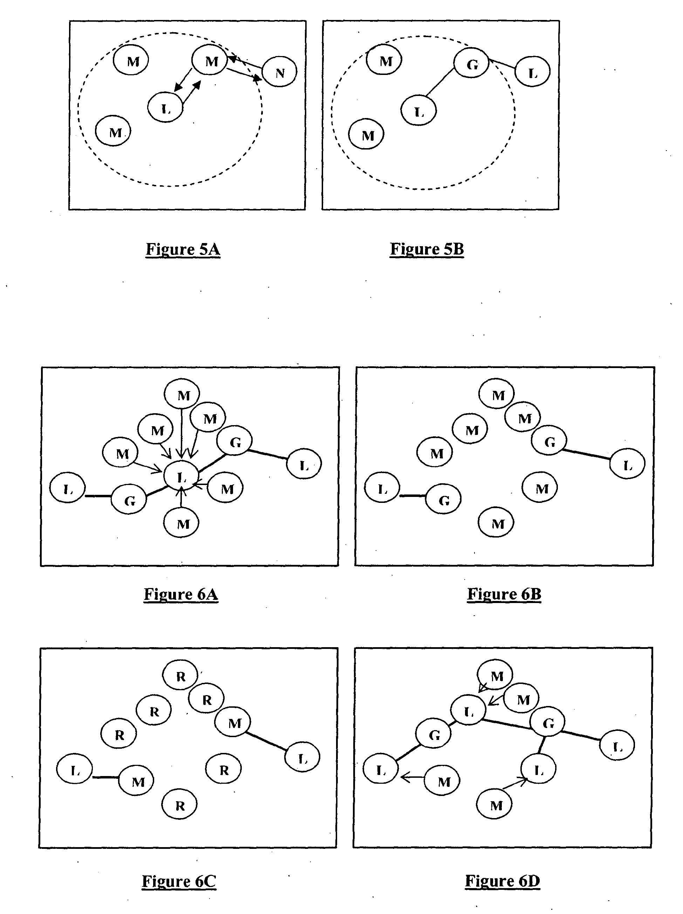

- les figures 5A et 5B représentent l'arrivée d'un nouveau noeud leader dans le réseau;
- les figures 6A à 6D représentent les étapes de reconfiguration suivant le départ d'un noeud leader.

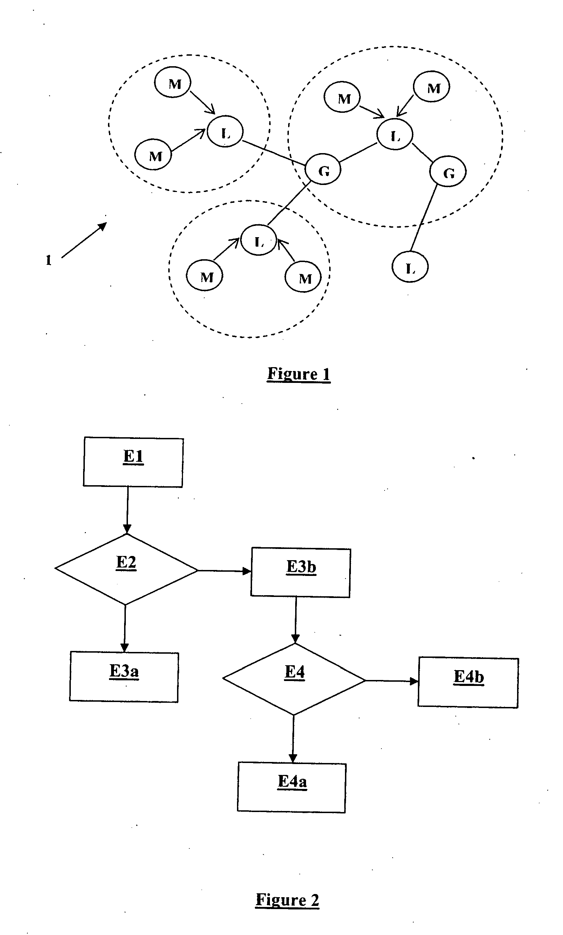

Sur la figure 1, on a représenté un réseau 1 d'objets communicants dont l'organisation résulte de la mise en oeuvre du procédé de l'invention. D'emblée, on notera que l'on appellera indifféremment par la suite "objet" ou "noeud" les objets communicants du réseau. Dans l'exemple particulier décrit, ces objets communicants utilisent des moyens de communication radio.

Le réseau résultant de la mise en oeuvre du procédé de l'invention peut comprendre plusieurs "partitions" correspondant respectivement à des sous-réseaux indépendants, c'est-à-dire non interconnectés entre eux. Les partitions sont susceptibles de fusionner du fait d'un changement dans le réseau, tels que le déplacement d'un ou de plusieurs noeuds ou l'arrivée de nouveaux noeuds. Une partition peut également être amenée à se scinder en plusieurs partitions du fait de changements dans la partition tels que le départ d'un ou de plusieurs naeud(s) ou bien le déplacement d'un noeud ou d'un groupe de noeud. Les opérations de fusion de plusieurs partitions et de scission d'une partition seront explicitées ultérieurement.

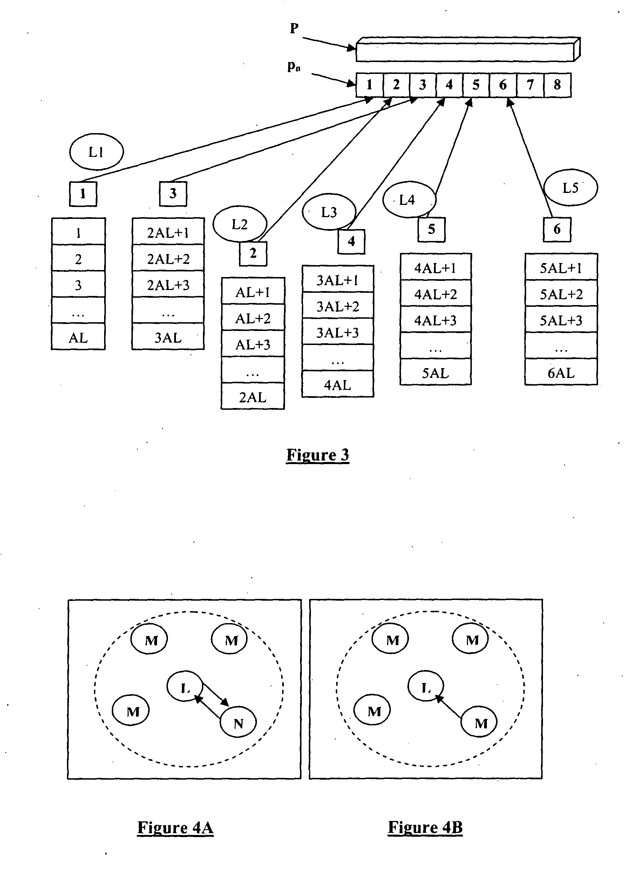

En référence à la figure 3, le réseau 1 dispose d'un ensemble d'adresses réseau P. En l'espèce, cet ensemble P comprend une plage d'adresses successives, laquelle est divisée en une pluralité de sous-plages successives disjointes. Par la suite, on appellera ces sous-plages des "pools d'adresses" et on les notera pₙ (avec 1 ≤ n ≤ 8 dans l'exemple particulier de la figure 3). Dans l'exemple particulier décrit ici, les pools d'adresses sont tous de même longueur, notée AL, autrement dit elles contiennent toutes le même nombre AL d'adresses. En outre, le pool numéroté n, pₙ, contient les adresses successives suivantes : (n-1).AL+1, (n-1).AL+2, ..., (n-1).AL+x, ..., n.AL. En variant, on pourrait envisager de décomposer l'ensemble d'adresses du réseau en pools de longueurs différentes.

L'organisation mise en place dans le réseau 1 représenté sur la figure 1 est basée sur des noeuds "leaders" Lᵢ, lesquels couvrent des cellules respectives de communication, notées Cᵢ (avec 1 ≤ i ≤ 5 dans l'exemple particulier de la figure 3), et sur des noeuds "membres" M_{i,j} appartenant aux cellules Cᵢ. Une cellule Cᵢ associée à un noeud leader Lᵢ correspond à la zone de couverture, ou de communication, de ce noeud leader Lᵢ.

Il existe trois rôles possibles pour les noeuds, ou objets communicants, dans cette organisation : leader, membre et passerelle.

Une cellule Cᵢ comprend un seul noeud leader, noté Lᵢ, apte à recevoir dans sa cellule Cᵢ un ou plusieurs noeuds voisins, membre(s) ou passerelle(s). Par définition, dans l'exemple particulier décrit ici, un noeud est voisin d'un autre noeud, si les deux noeuds sont séparés par un seul saut, autrement dit si les deux noeuds peuvent communiquer directement l'un avec l'autre. On pourrait envisager, dans une variante, de considérer que deux noeuds sont voisins lorsqu'ils sont séparés par un maximum de deux, voire de plus de deux, sauts. Le noeud leader Lᵢ a pour rôle de prendre la tête des opérations d'allocation d'adresses et de routage des communications pour les noeuds appartenant à sa cellule Cᵢ, comme cela sera explicité plus loin.

Un noeud leader Lᵢ a plusieurs rôles actifs dans l'organisation. Un premier rôle du noeud leader Lᵢ est de s'attribuer ou d'obtenir un ou plusieurs pool(s) d'adresses pₙ à gérer et de gérer ce(s) pool(s) en allouant les adresses qui y sont contenues à lui-même et aux noeuds intégrant sa cellule Cᵢ. Les noeuds leaders agissent ainsi comme des serveurs DHCP vis-à-vis des nouveaux noeuds arrivant dans le réseau. Les différents noeuds leaders du réseau se partagent les pools d'adresses pₙ, un pool d'adresses ne pouvant être octroyé qu'à un seul noeud leader dans une partition donnée. Grâce à cela, l'unicité de chacune des adresses allouées est garantie au sein d'une même partition. Par ailleurs, lorsqu'un nouveau noeud leader se voit attribuer un pool d'adresses à gérer, il envoie à tous les noeuds leaders de sa partition un message pour les informer de l'utilisation de ce nouveau pool d'adresses. Ce message est délivré uniquement aux noeuds leaders, ce qui évite une diffusion large de l'information à travers tous les noeuds du réseau. Un second rôle du noeud leader Lᵢ est de router les communications entrantes et sortantes des autres noeuds de sa cellule Cᵢ. Un troisième rôle du noeud leader Lᵢ est de diffuser régulièrement un message "broadcast" *LDBR* (*Leader Broadcast.)* de notification de présence contenant l'adresse du noeud leader Lᵢ, un identifiant de partition, ainsi que le nombre de leaders et le nombre de pools d'adresses déjà octroyés dans la partition. Par message "broadcast", on entend désigner un message envoyé vers tous les noeuds dans le voisinage du noeud émetteur, le message broadcast étant traité par tout noeud le recevant, par opposition à message "unicast" qui désigne un message envoyé à un seul noeud, dont l'adresse est indiquée dans l'en-tête du message en tant qu'adresse de destination, le message unicast étant traité par ce seul noeud. Un quatrième rôle du noeud leader est de diffuser à destination de tous les leaders de sa partition toute information de mise à jour, s'il a connaissance localement d'un changement dans le réseau. L'information de mise à jour peut concerner en particulier le nombre de leaders de la partition et le nombre du pool d'adresses déjà octroyés dans la partition ou encore l'identifiant.

Un noeud membre est un noeud voisin d'un seul noeud leader dans la structure de communication et dont les communications entrantes et sortantes sont acheminées via ce noeud leader. Un noeud membre a un rôle passif dans l'organisation. On notera qu'un noeud membre peut se transformer en noeud passerelle de manière à connecter un nouveau noeud leader à un noeud leader existant déjà dans le réseau.

Dans une partition, les noeuds leaders ne sont pas connectés directement entre eux, mais par l'intermédiaire des noeuds passerelles. Un noeud passerelle est donc un noeud voisin d'au moins deux noeuds leaders et ayant pour rôle d'assurer la communication entre ces deux noeuds leaders. A ce titre, les noeuds passerelles ont un rôle actif dans l'organisation. On notera qu'un noeud passerelle entre deux noeuds leaders d'une même partition est attaché à l'un seul des deux noeuds leaders qu'il relie, autrement dit appartient à la cellule de l'un des deux noeuds leaders. Un noeud passerelle est donc aussi un noeud membre ayant une fonctionnalité supplémentaire d'interconnexion de deux leaders, par rapport aux noeuds membres ordinaires.

L'ensemble des noeuds leaders, aptes à communiquer entre eux par l'intermédiaire de noeuds passerelles, et des noeuds membres (y compris passerelles) appartenant aux cellules de ces noeuds leaders forment ce que l'on appelle une partition.

Une fonction *f*(*n*) d'allocation d'adresses dans une cellule est implémentée dans tous les noeuds du réseau, quel que soit leur rôle. La fonction *f*(*n*) n'est activée que sur les noeuds leaders. L'utilisation de cette fonction *f*(*n*) permet à un noeud leader Lᵢ de générer une adresse disponible dans sa cellule, sans conflit d'adresses avec une autre adresse déjà allouée à un noeud de la cellule Cᵢ, à partir d'une entrée correspondant à la dernière allocation d'adresse faite par ce noeud leader Lᵢ. Dans l'exemple particulier décrit, la fonction *f*(*n*) est telle que *: f* (*n*) *= f* (*n* -1) + 1. Ainsi, la fonction *f*(*n*) commence par allouer la première adresse d'un pool pᵢ au premier noeud arrivé dans la cellule Cᵢ et termine lorsque toutes les adresses du pool pᵢ sont utilisées. Si, après épuisement de toutes les adresses du pool pᵢ, un nouveau noeud arrive dans la cellule Cᵢ. autrement dit sous la couverture du noeud leader L_{i,} un nouveau pool d'adresses pᵢ., disponible la partition à laquelle appartient le noeud Lᵢ est octroyé au noeud leader Lᵢ. Une information de mise à jour concernant les pools d'adresses utilisés, indiquant que le nombre total de pools désormais utilisés dans la partition, est alors diffusée à tous les noeuds leaders de la partition. La plage d'adresses P est ainsi gérée de façon distribuée par les seuls noeuds leaders. Lorsqu'un nouveau pool d'adresses est utilisé par un noeud leader, il suffit de mettre à jour l'information sur le nombre total de pools d'adresses utilisés auprès des seuls noeuds leaders pour éviter des conflits d'adresses dans la partition.

Dans le cas où un pool cesse d'être utilisé par un noeud leader, ce dernier envoie un message à tous les noeuds leaders de sa partition pour les informer du fait que ce pool est redevenu disponible.

On va maintenant décrire le procédé pour organiser un réseau d'objets communicants tel que le réseau 1 dans une zone de service, selon un mode de réalisation particulier de l'invention. Par "zone de service", on entend désigner une zone prédéfnie dans laquelle des utilisateurs souhaitent que le réseau d'objets communicants rende un service donné.

Lorsqu'un nouveau noeud arrive dans le réseau 1, les opérations d'allocation d'une adresse et d'intégration dans la structure du réseau 1 se déroulent en un maximum de trois phases. Dans une première phase a) de détection de noeud leader, le nouveau noeud observe, c'est-à-dire attend, la réception d'un message *LDBR (Leader Broadcast)* de notification de présence d'un noeud leader. S'il le reçoit, il entame une procédure d'allocation d'adresse en communicant directement de façon unicast avec le noeud leader voisin et prend le rôle de noeud membre. Dans une deuxième phase b) de détection de noeud membre, si aucun noeud leader n'est détecté, le nouveau noeud fait une découverte de son voisinage en diffusant un message *MBNS (Member Neighbor Solicitation)* de sollicitation de noeud membre, pour rechercher un noeud membre (y compris passerelle) dans son voisinage. S'il reçoit en réponse un message d'annonce *MBNA (Member Neighbor Advertisement)* d'un noeud membre voisin, il entame une procédure d'allocation d'un pool d'adresses en communicant avec un noeud leader par l'intermédiaire du noeud membre voisin, et prend le rôle de nouveau noeud leader. Dans une troisième phase c) d'établissement d'une nouvelle partition, si aucun noeud voisin (leader, membre ou passerelle) n'est détecté, le nouveau noeud s'alloue une adresse en utilisant la fonction *f*(*n*) et prend le rôle de "premier" noeud leader d'une nouvelle partition. Il génère également, de façon aléatoire, un nombre constituant un identifiant de partition destiné à être inséré dans les messages *LDBR (Leader Broadcast)* qui seront diffusés régulièrement par lui et par l'ensemble des futurs noeuds leaders de cette nouvelle partition. Ainsi une nouvelle partition apparaît dans la zone de service.

On va maintenant décrire de façon plus détaillée les protocoles mis en oeuvre dans les situations suivantes : établissement d'une partition, intégration d'un noeud membre dans une partition existante, intégration d'un noeud leader dans une partition existante, départ d'un noeud, division d'une partition et fusion de partitions.

### Etablissement d'une partition

En référence à la figure 2, lorsqu'un premier objet communicant N arrive dans le réseau (étape 1), durant une phase a) de détection de noeud leader, il observe, autrement dit attend, la réception d'un message *LDBR* diffusé par un noeud leader, au maximum jusqu'à l'expiration d'un délai *LDBR_TIMEOUT* prédéfini (étape 2). Comme il n'y a aucun noeud leader dans le voisinage du premier objet N, aucun message *LDBR* n'est reçu. La phase a) est alors suivie d'une phase b) de détection de noeud membre. Durant cette phase b), l'objet N diffuse un message *MBNS* de sollicitation de noeud membre dans la zone couvrant son voisinage d'un saut (étape 3b) et observe la réception d'un message *MBNA* d'annonce de noeud membre, au maximum jusqu'à l'expiration du délai *MBNA_TIMEOUT* prédéfini (voir étape 4). Comme l'objet N est seul dans sa zone de couverture, aucun message *MBNA* n'est reçu. La phase b) est alors suivie d'une phase c) d'établissement d'une nouvelle partition. Durant cette phase c), l'objet N prend alors le rôle de premier noeud d'une nouvelle partition. Lors d'une étape 4b, il attribue un identifiant à sa partition par génération d'un nombre aléatoire, détermine un pool d'adresses, s'alloue la première adresse de ce pool et déclenche la diffusion régulière d'un message *LDBR.* Dans l'exemple particulier décrit ici, le pool d'adresses déterminé par le premier leader de la partition est le premier pool p₁ de l'ensemble de pools P.

### Intégration d'un noeuds membre dans une partition existante

En référence aux figures 2, 4A et 4B, lorsqu'un nouvel objet communicant N arrive dans le réseau (étape 1), durant une phase a) de détection de leader, il observe la réception d'un message *LDBR* diffusé par un noeud leader pendant une durée ne pouvant excéder le délai *LDBR_TIMEOUT* prédéfini (étape 2). S'il y a un noeud leader L dans le voisinage d'un saut du nouvel objet N, celui-ci reçoit le message *LDBR* diffusé régulièrement par ce noeud leader L. Si le nouvel objet N reçoit plusieurs messages *LBDR* en provenance de plusieurs noeuds leaders appartenant respectivement à plusieurs partitions, il sélectionne le noeud leader de la partition ayant le plus grand nombre de noeuds leaders, étant rappelé que le nombre de leaders d'une partition est inséré dans le message *LDBR* diffusé par chacun des noeuds leaders de cette partition. Le fait de privilégier l'intégration d'un nouvel objet dans la plus grosse partition plutôt que dans la plus petite a pour intérêt qu'il y a ainsi une probabilité plus élevée pour ce nouvel objet de conserver son adresse après fusion, comme cela ressortira plus loin de la description d'une fusion. Si le nouvel objet N reçoit plusieurs messages *LBDR* en provenance de plusieurs noeuds leaders de la même partition, il sélectionne ici de façon aléatoire l'un des noeuds leaders. En variante, on pourrait envisager un critère de sélection basé sur la capacité énergétique des leaders ou sur leurs identifiants. Le nouveau noeud N entame alors avec le noeud leader sélectionné L l'exécution d'une procédure d'allocation d'adresse directe à un saut (étape 3b), durant laquelle les deux noeuds L et N, voisins d'un saut, communiquent directement l'un avec l'autre. Durant cette procédure d'allocation, le nouveau noeud N envoie un message unicast *MBAR (Member Address Request)* de requête d'adresse à destination du noeud leader sélectionné L. Sur réception du message MBAR, le noeud leader L alloue une adresse au nouveau noeud N, en utilisant la fonction *f(n),* et lui envoie un message unicast *LDAA (Leader Address Allocation)* d'allocation d'adresse par un leader. Sur réception de l'adresse allouée, le nouvel objet N prend le rôle de noeud membre M, associé au noeud leader L, et configure ses interfaces réseau en construisant une route vers son noeud leader L de manière à ce que tous les messages sortants du noeud membre M transitent par le noeud leader L. Le noeud membre M envoie un message *MBAA (Member Address Acknowledgement)* d'accusé de réception d'une adresse de membre à son noeud leader L. La procédure d'allocation est alors terminée.

### Intégration d'un noeud leader dans le réseau

En référence aux figures 2. 5A et 5B, si, durant la phase a), à l'étape E2, un nouvel objet N ne détecte pas de message *LDBR* de noeud leader, il considère qu'il n'est pas couvert par la cellule d'un noeud leader. La phase a) est alors suivie d'une phase b) de détection d'un noeud membre voisin. Lors de cette phase b), le nouveau noeud fait la découverte de son voisinage. Pour cela, il diffuse un message *MBNS* de sollicitation de noeud membre dans la zone de son voisinage d'un saut (voir étape E3a), en mode broadcast, puis observe la réception d'un message *MBNA* d'annonce de noeud membre (étape E4). Un noeud membre recevant une sollicitation envoie un message *MBNA* pour notifier sa présence. Dans l'exemple décrit ici, à l'expiration de la durée maximale d'observation prédéfinie, notée *MBNA_TIMEOUT,* le nouvel objet sélectionne de façon aléatoire un noeud membre ayant répondu à la sollicitation *MBNS* par l'envoi d'un message de présence *MBNA.* Le nouvel objet entame alors avec le noeud membre sélectionné M l'exécution d'une procédure d'allocation d'adresse à deux sauts, en envoyant au noeud membre M un message unicast *MBAR (Member Address Request)* de requête d'adresse de membre. Le noeud membre M demande alors à son noeud leader L d'allouer un nouveau pool d'adresses, extrait de la plage d'adresses du réseau. Ce nouveau pool d'adresses est envoyé par le noeud leader L au nouvel objet N, dans un message *LDAA (Leader Address Allocation),* via le noeud membre M. Le nouvel objet N prend alors le rôle de leader L', s'alloue la première adresse du pool reçu et envoie au noeud leader L un message *MBAA (Member Address Acknowledgement)* d'accusé de réception d'une adresse de membre via le noeud membre M. Sur réception de ce message *MBAA*, le noeud membre M intermédiaire prend le rôle de passerelle G entre les deux noeuds leaders L et L'. Chacun des noeuds leaders L (L') ajoute dans une table propre de correspondance Leader-Passerelle un nouveau couple Leader-Passerelle G-L' (G-L). Par ailleurs, après avoir alloué un nouveau pool d'adresses au noeud leader L', le noeud leader L envoie à tous les noeuds leaders, via les passerelles, de la partition un message pour mettre à jour au niveau de tous les leaders une information relative à l'utilisation des pools d'adresses dans la partition. Dans l'exemple particulier décrit, dans lequel les pools d'adresses sont tous de même longueur, cette information relative à l'utilisation des pools contient le nombre de pools déjà alloués (ou utilisés) dans la partition.

Dans le mode de réalisation précédemment évoqué, dans lequel les pools d'adresses peuvent être de longueurs différentes, au lieu d'envoyer à tous les leaders le nombre de pools d'adresses déjà alloués dans la partition, le noeud leader L envoie à tous les noeuds leaders de la partition la dernière adresses du pool d'adresse ayant été alloué au noeud leader L'.

On pourrait également envisager que ce soit le nouveau noeud leader L' qui envoie à tous les leaders de la partition le message pour mettre à jour l'information sur l'utilisation des pools d'adresses dans la partition.

### Départ d'un noeud

Si un noeud membre quitte le réseau, tous les messages qui lui sont envoyés sont perdus mais cela n'a pas d'impact sur la configuration et l'organisation du réseau. Le noeud leader associé détecte l'absence du noeud membre ayant quitté le réseau et mémorise l'adresse allouée à ce noeud membre en vue de la réutiliser.

Si un noeud passerelle G quitte le réseau, les noeuds leaders L et L' précédemment connectés à ce noeud passerelle G demandent à leurs noeuds membres M, M' d'entrer en mode actif de détection de messages *LDBR.* Les noeuds membres M, M' qui reçoivent les deux messages *LDBR* respectivement diffusés par les deux leaders L et L' se portent candidats pour le rôle de nouvelle passerelle. L'un de ces candidats est sélectionné pour jouer le rôle de nouvelle passerelle entre les leaders L et L'. Le critère de sélection peut par exemple être le noeud candidat situé dans la cellule comptant le moins de noeud membres.

Si un noeud leader L quitte le réseau sans prévenir, après un certain nombre de périodes d'une durée prédéfinie sans réception d'un message *LDBR,* les noeuds membres M précédemment associés à ce noeud leader L déclenchent une opération de reconfiguration en abandonnant leurs adresses et en réitérant les étapes de la figure 2 jusqu'à obtenir une nouvelle adresse et prendre un rôle a priori de membre ou de leader. Chaque noeud passerelle G d'interconnexion entre le noeud leader L et un noeud leader L', précédemment géré par le noeud L, devient un simple noeud membre géré par le noeud leader restant L'. Ainsi, le pool d'adresses alloué au noeud leader L redevient alors disponible pour une nouvelle allocation. Un noeud passerelle ayant détecté l'absence du leader L informe tous les noeuds leaders de la partition du fait que ce pool est redevenu disponible.

### Division de partition

Lorsqu'une partition A se scinde en deux partitions B et B', chacune des deux partitions B et B' assimile cette scission à un départ d'un groupe de noeuds et agissent si besoin pour le maintien d'une structure virtuelle de communication. Les noeuds leaders dans la partition A conservent leur rôle de leader dans leur nouvelle partition B ou B'. Les noeuds membres ne prennent aucune initiative tant qu'ils restent sous la couverture de leur noeud leader, c'est-à-dire dans la cellule de celui-ci. En revanche, si un noeud membre perd le lieu avec son noeud leader, il déclenche les opérations d'allocation d'une nouvelle adresse et d'intégration dans une nouvelle partition B ou B', comportant une phase a) de détection d'un noeud leader voisin suivie, si besoin, d'une phase b) de découverte de voisinage elle-même suivie, si besoin, d'une phase c) d'établissement d'une nouvelle partition, comme précédemment décrit. Si un lien entre un couple leader-passerelle est rompu, les leaders précédemment connectés l'un à l'autre par l'intermédiaire de cette passerelle exécutent les mêmes actions que celles, précédemment décrites, exécutées en cas de départ du noeud passerelle.

### Fusion de partitions

La dynamicité d'un groupe de noeuds (du à la mobilité, aux mécanismes de gestion d'énergie, etc.) formant une partition et l'expansion d'une partition sont les deux principales raisons conduisant à la fusion de deux partitions. Cette fusion est déclenchée par la détection préalable, par au moins un noeud, de deux partitions différentes dans son voisinage, ces partitions étant identifiées par leurs identifiants respectifs. On rappelle ici que l'identifiant d'une partition, déterminé par le tout premier noeud leader de cette partition, est un nombre, codé sur x bits, généré de façon aléatoire. Si le nombre x de bits sur lesquels sont codés les identifiants de partition est suffisamment grand, le risque de conflit entre deux identifiants respectifs de deux partitions distinctes est négligeable, dans la mesure où le nombre de partitions dans une zone de service est bien inférieur au nombre total d'identifiants différents pouvant être codés sur les x bits.

La détection de deux partitions susceptibles de fusionner est ici réalisée par un nouveau noeud N arrivant dans le réseau, durant la phase a) de détection de noeud(s) leader(s) (étapes E2 et E3b) en référence à la figure 2). Du fait qu'elle est réalisée par un nouvel objet arrivant, la détection des deux partitions ne nécessite pas le maintien permanent en mode actif des émetteurs/récepteurs radios de tous les noeuds du réseau, ce qui représenterait une grosse dépense énergétique pour le réseau. Grâce à l'invention, la détection de deux partitions est économique sur le plan énergétique.

Par la suite, on appellera la "petite" partition, celle ayant le moins de noeuds leaders, et la "grosse" partition celle ayant le plus grand nombre de noeuds leaders.

Durant la phase a), le nouveau noeud N arrivant détecte donc deux noeuds leaders L1 et L2 appartenant respectivement à la grosse partition et à la petite partition, par la réception de deux messages LBDR contenant deux identifiants ID1 et ID2 différents. Le nouveau noeud N choisit la grosse partition pour procéder à la procédure d'allocation d'adresse à un saut avec le noeud leader L1 détecté dans cette grosse partition puis devient un noeud membre attaché à ce noeud leader L1. En outre, le nouveau noeud N prend le rôle de passe relle entre les deux partitions.

Le nouveau noeud N informe
- d'une part, les noeuds leaders de la petite partition, par l'intermédiaire du noeud leader L2, du fait qu'il convient de fusionner, par l'envoi d'un message *MGNT* (*Merge Notification*) de notification de fusion, et
- d'autre part, les noeuds leaders de la grosse partition, par l'intermédiaire du noeud leader L1, du fait qu'il convient de mettre à jour le nombre de pools d'adresses utilisés et le nombre de leaders dans la partition résultant de la fusion, par l'envoi d'un message *LDAU (Leader Address Update).*

Le noeud leader L1 de la grosse partition récupère le nombre de pools d'adresses déjà alloués dans la petite partition par l'intermédiaire du nouvel objet arrivant N. II calcule ensuite le nombre total de pools d'adresses qui seront nécessaires après la fusion et envoie le message *LDAU (Leader Address Update)* de mise à jour des adresses à destination des autres noeuds leaders dans la grosse partition afin de mettre à jour l'information sur le nombre de pools d'adresses utilisés et l'information sur le nombre de leaders dans la partition résultant de la fusion.

Le noeud leader L2 envoie un message *MGNT (Merge Notification)* de notification de fusion qui est diffusé à tous les noeuds leaders de la petite partition. Cette notification de fusion contient ici le nombre de pools d'adresses utilisés dans la grosse partition. On rappelle ici que, dans une partition, les pools d'adresses successifs sont alloués l'un après l'autre, ici dans un ordre croissant à partir du premier pool p₁ de la plage d'adresses P, aux nouveaux noeuds leaders arrivant dans la partition ainsi qu'aux noeuds leaders ayant besoin d'un nouveau pool d'adresses après avoir épuisé leur précédent pool d'adresses. Par conséquent, sur réception d'une notification de fusion *MGNT,* les noeuds leaders de la petite partition changent de pools d'adresses en procédant à un décalage de pools d'un pas égal au nombre total de pools utilisés dans la grosse partition, afin d'utiliser des pools non utilisés par la grosse partition. Le leader ayant dans la petite partition le pool numéroté n, pₙ, utilise dans la partition résultant de la fusion le pool numéroté N+n et s'alloue à lui-même la première adresse de ce pool. Ainsi, après la fusion, les pools d'adresses gérés par les noeuds leaders de la petite partition sont ceux qui suivent les pools d'adresses gérés par les noeuds leaders de la grosse partition. En d'autres termes, si le pool le plus élevé dans la grosse partition porte le numéro N, alors les pools d'adresses alloués aux leaders de la petite partition sont les pools suivants numérotés N+1, N+2, etc... Une fois que les leaders de la petite partition ont décalé leurs pools d'adresses, ils changent certains paramètres, tels que l'identifiant de partition et le nombre total de pools d'adresses utilisés dans la partition (c'est-à-dire celle qui résulte de la fusion), dans les messages *LDBR* qu'ils diffusent régulièrement. Sur réception du nouvel identifiant de partition contenu dans les messages *LBDR* diffusés par les noeuds leaders, chaque noeud membre (y compris les noeuds passerelles) de la petite partition déclenche l'exécution d'une procédure de traduction de son adresse, analogue à celle exécutée par le noeud leader, consistant à déterminer l'adresse correspondant à son adresse initiale dans un pool d'adresses décalé du nombre N de pools supplémentaires apportés par la grosse partition. Par adresse "correspondante", on entend désigner la nouvelle, adresse ayant la même position dans le nouveau pool que celle de la précédente adresse dans l'ancien pool. Les noeuds membres déterminent leur nouvelle adresse à partir de leur adresse avant la fusion, de l'information sur le nombre total de pools utilisés avant la fusion et de l'information reçue dans les nouveaux messages *LDBR* sur le nombre total de pools utilisés après fusion. A partir du nombre de pools utilisé avant fusion et du nombre de pools utilisés après fusion, chaque noeud membre en déduit le nombre de pools utilisés par la grosse partition. Par souci de clarté, prenons l'exemple d'un noeud leader Lᵢ de la petite partition auquel est alloué le pool d'adresses numéroté n, noté pₙ. Après fusion, ce même noeud leader Lᵢ est en charge du pool d'adresses numéroté N+n, N étant le nombre de pools utilisés dans la grosse partition juste avant la fusion. Un noeud membre M_{i,j} de la petite partition, situé dans la cellule du noeud leader Lᵢ, et ayant dans le pool pₙ l'adresse ayant la position j, à savoir (n-1).AL+j, traduit cette adresse en une adresse décalée après fusion [(n-1)+N].AL+j. Cette procédure de traduction garantit l'unicité des adresses après la fusion.

Dans un mode de réalisation particulier, un noeud peut décider à tout moment de changer de rôle, dans le but notamment de réduire sa consommation en énergie. Ainsi, un noeud leader ou passerelle peut laisser un noeud membre prendre son rôle. Grâce à cela, les dépenses énergétiques des noeuds peuvent être distribuées de façon plus équitable sur les différents noeuds du réseau au fil du temps.

Les objets communicants aptes à intégrer le réseau 1 d'objets communicants, comprennent chacun tous les moyens nécessaires pour mettre en oeuvre les différents mécanismes et protocoles qui viennent d'être décrits, seuls les moyens nécessaires étant activés pour assurer le rôle pris par l'objet dans la structure virtuelle. En particulier, chaque objet comprend :
■ un premier module fonctionnel apte à assurer un rôle de leader couvrant une cellule de communication,
■ un second module fonctionnel apte à assurer un rôle de membre dans une cellule couverte par un noeud leader,
■ un troisième module fonctionnel apte à assurer un rôle de passerelle pour la communication entre deux noeuds leaders.

Ces trois modules fonctionnels, de leader, de membre et de passerelle, sont agencés pour mettre en oeuvre les actions précédemment décrites en référence aux noeuds leaders, aux noeuds membres et aux noeuds passerelles.

Chaque objet comprend également :
■ un premier module de configuration, pour mettre en oeuvre la phase a) de détection de noeud leader telle que précédemment décrite, notamment agencé pour
   - détecter si un noeud leader est présent dans le voisinage de l'objet, et,
   - en cas de détection d'un noeud leader voisin, obtenir une adresse auprès dudit noeud leader et déclencher l'activation des seconds moyens fonctionnels;
■ un second module de configuration, pour mettre en oeuvre une phase b) de détection de noeud membre telle que précédemment décrite, notamment agencé pour
   - détecter si un noeud membre est présent dans le voisinage de l'objet, et
   - en cas de détection d'un noeud membre voisin, obtenir un pool d'adresses à gérer, s'allouer une adresse dudit pool et
      déclencher l'activation du premier module fonctionnel.

Le second module de configuration est destiné à être activé après le premier module de configuration, dans le cas où l'objet n'a pas détecté de noeud leader dans son voisinage.

L'objet comprend en outre un troisième module de configuration, pour mettre en oeuvre la phase c) d'établissement d'une partition précédemment décrite, agencé pour, si l'objet ne détecte ni noeud leader, ni noeud membre dans son voisinage, s'attribuer un pool d'adresses à gérer, prendre le rôle de premier noeud leader d'une nouvelle partition de réseau et attribuer un identifiant à ladite partition. Ce troisième module de configuration est destiné à être activé après les premier et second modules de configuration, dans le cas où l'objet n'a détecté ni noeud leader, ni noeud membre dans son voisinage.

Enfin, l'objet comprend un module de commande agencé pour commander l'activation et le fonctionnement des modules fonctionnels et des modules de configuration.

## Revendications

1. Procédé pour organiser un réseau d'objets communicants, en au moins une partition comportant une pluralité de cellules de communication respectivement couvertes par une pluralité de noeuds leaders aptes à communiquer entre eux, le réseau disposant d'un ensemble d'adresses à allouer scindé en une pluralité de pools d'adresses destinés à être gérés de façon distribuée par les noeuds leaders du réseau, procédé dans lequel, lorsqu'un nouveau noeud arrive dans le réseau, le procédé comprend une phase a) de détection de noeud leader suivie, le cas échéant, d'une phase b) de détection de noeud membre, telles que :
- durant la phase a), si le nouveau noeud détecte dans son voisinage un noeud leader, ledit noeud leader lui alloue une adresse extraite d'un pool d'adresses qu'il gère et le nouveau noeud prend le rôle de noeud membre dans la cellule du noeud leader, les messages en provenance ou à destination d'un noeud membre appartenant à une cellule donnée étant destinés à transiter par l'intemédiaire du noeud leader couvrant ladite cellule; **caractérisé en ce que**
- si le nouveau noeud ne détecte pas de noeud leader dans son voisinage, il passe à la phase b),
- durant la phase b), si le nouveau noeud détecte dans son voisinage un noeud membre appartenant à une première cellule, il prend le rôle de leader couvrant une deuxième cellule, obtient un pool disponible d'adresses à gérer et s'alloue l'une des adresses dudit pool obtenu.

2. Procédé selon la revendication 1, dans lequel, le noeud membre détecté par le nouveau noeud dans son voisinage durant la phase b) devient un noeud passerelle entre les deux noeuds leaders des première et deuxième cellules voisines, lesdits noeuds leaders étant destinés à communiquer entre eux par l'intermédiaire du noeud passerelle.

3. Procédé selon l'une des revendications 1 et 2, dans lequel, si ledit nouveau noeud ne détecte ni noeud leader, ni noeud membre dans son voisinage durant les phases a) et b) respectivement, la phase b) est suivie d'une phase c) durant laquelle le nouveau noeud s'attribue un pool d'adresses à gérer, prend le rôle de premier noeud leader d'une nouvelle partition de réseau et attribue un identifiant à ladite partition.

4. Procédé selon la revendication 3, dans lequel, pour déterminer l'identifiant de la nouvelle partition, ledit premier noeud leader génère un nombre de façon aléatoire.

5. Procédé selon l'une des revendications précédentes, dans lequel, durant la phase a), le nouveau noeud observe la réception d'un message régulièrement diffusé par les noeuds leaders afin de détecter la présence d'un noeud leader dans son voisinage.

6. Procédé selon l'une des revendications précédentes, dans lequel, durant la phase b), le nouveau noeud diffuse à destination de son voisinage un message de sollicitation d'un noeud membre et observe la réception d'un message d'annonce de noeud membre.

7. Procédé selon l'une des revendications précédentes, dans lequel, durant la phase b), pour obtenir un pool d'adresses à gérer, le nouveau noeud transmet une requête d'adresses au noeud leader couvrant la première cellule par l'intermédiaire du noeud voisin membre détecté dans la première cellule et, en réponse, le noeud leader de la première cellule notifie au nouveau noeud un pool d'adresses à gérer par l'intermédiaire dudit noeud membre.

8. Procédé selon l'une des revendications précédentes, dans lequel, durant la phase b), l'un des deux noeuds leaders couvrant respectivement les première et deuxième cellules transmet aux autres noeuds leaders de la partition un message pour les informer de l'utilisation d'un nouveau pool d'adresses par le nouveau noeud leader couvrant ladite deuxième cellule.

9. Procédé selon l'une des revendications précédentes, dans lequel l'ensemble des adresses du réseau étant scindé en une succession de pools d'adresses disjoints et chaque pool comportant une plage d'adresses successives, les pools d'adresses successifs sont attribués dans un ordre donné aux noeuds leaders intégrant successivement la partition et, dans une cellule, les adresses successives du pool géré par le noeud leader de ladite cellule sont allouées dans un ordre donné aux noeuds intégrant successivement la cellule.

10. Procédé selon l'une des revendications précédentes, dans lequel, dans le cas où le réseau comprend au moins deux partitions indépendantes l'une de l'autre mais susceptibles d'être fusionnées, la détection des deux partitions est réalisée par un nouveau noeud arrivant dans le réseau durant la phase a) par la détection de deux noeuds leaders voisins appartenant à deux partitions différentes.

11. Procédé selon la revendication 9, dans lequel, pour fusionner les deux partitions,
- les noeuds leaders d'une première des deux partitions changent de pools d'adresses en procédant à un décalage de pools d'un pas égal au nombre total de pools utilisés dans la seconde des deux partitions, afin d'utiliser des pools non utilisés par la seconde partition, et diffusent dans leurs cellules respectives un message contenant une information sur le nombre total de pools utilisés après la fusion, et
- lesdits noeuds membres de la première partition déterminent leur nouvelle adresse à partir de leur adresse avant fusion et du nombre de pools d'adresses utilisés par la seconde partition.

12. Procédé selon la revendication 11, dans lequel un message de notification de fusion est envoyé aux noeuds leaders de la première partition pour déclencher un changement des adresses dans la première partition, alors qu'un message de mise à jour contenant une information relative aux pools d'adresses utilisés dans la partition après fusion et une information sur le nombre de leaders de la partition après fusion est envoyé aux noeuds leaders de la seconde partition.

13. Objet communicant apte à intégrer un réseau d'objets communicants, comprenant
■ des premiers moyens fonctionnels aptes à assurer un rôle de leader couvrant une cellule de communication, un noeud leader étant chargé d'allouer des adresses d'un pool d'adresses aux noeuds situés dans sa cellule et de router les messages en provenance ou à destination de noeuds membres appartenant à sa cellule;
■ des seconds moyens fonctionnels aptes à assurer un rôle de membre dans une cellule couverte par un noeud leader,
■ des premiers moyens de configuration, pour mettre en oeuvre une phase a) de détection de noeud leader, agencés pour
- détecter si un noeud leader est présent dans le voisinage de l'objet, et,
- en cas de détection d'un noeud leader voisin, obtenir une adresse auprès dudit noeud leader et déclencher l'activation des seconds moyens fonctionnels, l'objet étant **caractérisé en ce qu'**il comprend
■ des seconds moyens de configuration, pour mettre en oeuvre une phase b) de détection de noeud membre, agencés pour
- détecter si un noeud membre est présent dans le voisinage de l'objet, et
- en cas de détection d'un noeud membre voisin, obtenir un pool d'adresses à gérer, s'allouer une adresse dudit pool et déclencher l'activation des premiers moyens fonctionnels, les seconds moyens de configuration étant destinés à être mis en oeuvre après les premiers moyens de configuration, dans le cas où l'objet n'a pas détecté de noeud leader dans son voisinage.

14. Objet selon la revendication 13, comprenant en outre des troisièmes moyens fonctionnels aptes à assurer un rôle de passerelle pour la communication entre deux noeuds leaders, destinés à être activés dans le cas où l'objet étant dans la cellule couverte par un premier noeud leader, il détecte dans son voisinage un nouveau noeud arrivant dans le réseau et prenant le rôle de leader.

15. Réseau d'objets communicants comportant une pluralité d'objets selon l'une des revendications 13 et 14 formant au moins une partition.

## Claims

1. Method for organizing a network of communicating objects, into at least one partition comprising a plurality of communication cells respectively covered by a plurality of leader nodes able to communicate with each other, the network having a set of addresses to be allocated split into a plurality of pools of addresses intended to be managed in a distributed manner by the leader nodes of the network, a method in which, when a new node arrives in the network, the method comprises a phase a) of leader node detection followed, where appropriate, by a phase b) of member node detection, such that:
- during the phase a), if the new node detects a leader node in its vicinity, said leader node allocates it an address extracted from a pool of addresses that it manages and the new node takes the role of member node in the cell of the leader node, the messages originating from or addressed to a member node belonging to a given cell being intended to pass through the leader node covering said cell;
**characterized in that**
- if the new node does not detect any leader node in its vicinity, it goes on to the phase b),
- during the phase b), if the new node detects a member node in its vicinity that belongs to a first cell, it takes the role of leader covering a second cell, obtains an available pool of addresses to be managed and allocates one of the addresses of said pool obtained.

2. Method according to Claim 1, in which, the member node detected by the new node in its vicinity during the phase b) becomes a gateway node between the two leader nodes of the first and second neighboring cells, said leader nodes being intended to communicate with each other via the gateway node.

3. Method according to either of Claims 1 and 2, in which, if said new node detects neither leader node nor member node in its vicinity during the phases a) and b) respectively, the phase b) is followed by a phase c) during which the new node is assigned a pool of addresses to be managed, assumes the role of the first leader node of a new network partition and assigns an identifier to said partition.

4. Method according to Claim 3, in which, to determine the identifier of the new partition, said first leader node generates a number randomly.

5. Method according to one of the preceding claims, in which, during the phase a), the new node observes the reception of a message regularly broadcast by the leader nodes in order to detect the presence of a leader node in its vicinity.

6. Method according to one of the preceding claims, in which, during the phase b), the new node broadcasts to its vicinity a message invoking a member node and observes the reception of a member node announcement message.

7. Method according to one of the preceding claims, in which, during the phase b) to obtain a pool of addresses to be managed, the new node transmits an address request to the leader node covering the first cell via the neighboring member node detected in the first cell and, in response, the leader node of the first cell notifies the new node of a pool of addresses to be managed via said member node.

8. Method according to one of the preceding claims, in which, during the phase b), one of the two leader nodes respectively covering the first and second cells transmits to the other leader nodes of the partition a message to inform them of the use of a new pool of addresses by the new leader node covering said second cell.

9. Method according to one of the preceding claims, in which the set of addresses of the network being split into a succession of separate pools of addresses and each pool comprising a range of successive addresses, the pools of successive addresses are assigned in a given order to the leader nodes successively incorporating the partition and, in a cell, the successive addresses of the pool managed by the leader node of said cell are allocated in a given order to the nodes successively incorporating the cell.

10. Method according to one of the preceding claims, in which, in the case where the network comprises at least two partitions that are independent of each other but likely to be merged, the detection of the two partitions is performed by a new node arriving in the network during the phase a) by the detection of two neighboring leader nodes belonging to two different partitions.

11. Method according to Claim 9, in which, to merge the two partitions,
- the leader nodes of a first of the two partitions change pools of addresses by proceeding with a pool shift by a step equal to the total number of pools used in the second of the two partitions, in order to use pools that are not used by the second partition, and broadcast in their respective cells a message containing information on the total number of pools used after the merge, and
- said member nodes of the first partition determine their new address from their premerge address and the number of pools of addresses used by the second partition.

12. Method according to Claim 11, in which a merge notification message is sent to the leader nodes of the first partition to trigger a change of the addresses in the first partition, whereas an update message containing information relating to the pools of addresses used in the post-merge partition and information on the number of leaders of the post-merge partition is sent to the leader nodes of the second partition.

13. Communicating object able to integrate a network of communicating objects, comprising
■ first functional means able to handle a leader role covering a communication cell, a leader node being responsible for allocating addresses from a pool of addresses to the nodes located in its cell and for routing the messages originating from or addressed to member nodes belonging to its cell;
■ second functional means able to handle a member role in a cell covered by a leader node,
■ first configuration means, for implementing a phase a) of leader node detection, arranged to
- detect whether a leader node is present in the vicinity of the object, and,
- if a neighbouring leader node is detected, obtain an address from said leader node and trigger the activation of the second functional means, the object being **characterized in that** it comprises
■ second configuration means, for implementing a phase b) of member node detection, arranged to
- detect whether a member node is present in the vicinity of the object, and
- if a neighboring member node is detected, obtain a pool of addresses to be managed, allocated itself an address from said pool and trigger the activation of the first functional means, the second configuration means being intended to be implemented after the first configuration means, in the case where the object has not detected any leader node in its vicinity.

14. Object according to Claim 13, also comprising third functional means able to perform the role of a gateway for the communication between two leader nodes, intended to be activated in the case where, the object being in the cell covered by a first leader node, it detects in its vicinity a new node arriving in the network and assuming the role of leader.

15. Network of communicating objects comprising a plurality of objects according to either of Claims 13 and 14 forming at least one partition.

## Patentansprüche

1. Verfahren zum Organisieren eines Netzwerks von kommunizierenden Objekten in mindestens einer Partition, die mehrere Kommunikationszellen aufweist, welche je von mehreren Leader-Knoten abgedeckt werden, die miteinander kommunizieren können, wobei das Netzwerk über eine Gruppe von zuzuweisenden Adressen verfügt, die in mehrere Adressenpools aufgeteilt sind, welche dazu bestimmt sind, von den Leader-Knoten des Netzwerks verteilt verwaltet zu werden, Verfahren, bei dem, wenn ein neuer Knoten im Netzwerk ankommt, das Verfahren eine Phase a) der Erfassung eines Leader-Knotens, ggf. gefolgt von einer Phase b) der Erfassung eines Mitglied-Knotens enthält, derart, dass:
- während der Phase a), wenn der neue Knoten in seiner Umgebung einen Leader-Knoten erfasst, der Leader-Knoten ihm eine Adresse zuweist, die aus einem von ihm verwalteten Adressenpool entnommen wird, und der neue Knoten die Aufgabe eines Mitglied-Knotens in der Zelle des Leader-Knotens übernimmt, wobei die von einem zu einer gegebenen Zelle gehörenden Mitglied-Knoten kommenden oder für ihn bestimmten Mitteilungen dazu bestimmt sind, über den die Zelle abdeckenden Leader-Knotens zu laufen;
**dadurch gekennzeichnet, dass**
- der neue Knoten, wenn er keinen Leader-Knoten in seiner Umgebung erfasst, zur Phase b) übergeht,
- während der Phase b) der neue Knoten, wenn er in seiner Umgebung einen zu einer ersten Zelle gehörenden Mitglied-Knoten erfasst, die Aufgabe eines Leaders übernimmt, der eine zweite Zelle abdeckt, einen verfügbaren zu verwaltenden Adressenpool erhält und sich eine der Adressen des erhaltenen Pools zuweist.

2. Verfahren nach Anspruch 1, bei dem der vom neuen Knoten während der Phase b) in seiner Umgebung erfasste Mitglied-Knoten zu einem Gateway-Knoten zwischen den zwei Leader-Knoten der ersten und zweiten benachbarten Zellen wird, wobei die Leader-Knoten dazu bestimmt sind, über den Gateway-Knoten miteinander zu kommunizieren.

3. Verfahren nach einem der Ansprüche 1 und 2, bei dem, wenn der neue Knoten während der Phasen a) bzw. b) weder einen Leader-Knoten noch einen Mitglied-Knoten in seiner Umgebung erfasst, auf die Phase b) eine Phase c) folgt, während der der neue Knoten sich einen zu verwaltenden Adressenpool zuteilt, die Aufgabe eines ersten Leader-Knotens einer neuen Netzwerk-Partition übernimmt und der Partition eine Kennung zuweist.

4. Verfahren nach Anspruch 3, bei dem, um die Kennung der neuen Partition zu bestimmen, der erste Leader-Knoten zufällig eine Zahl erzeugt.

5. Verfahren nach einem der vorhergehenden Ansprüche, bei dem während der Phase a) der neue Knoten den Empfang einer Mitteilung beobachtet, die regelmäßig von den Leader-Knoten verbreitet wird, um das Vorhandensein eines Leader-Knotens in seiner Umgebung zu erfassen.

6. Verfahren nach einem der vorhergehenden Ansprüche, bei dem während der Phase b) der neue Knoten an seine Umgebung eine Mitteilung der Anforderung eines Mitglied-Knotens verbreitet und den Empfang einer Ankündigungsmitteilung eines Mitglied-Knotens beobachtet.

7. Verfahren nach einem der vorhergehenden Ansprüche, bei dem während der Phase b), um einen zu verwaltenden Adressenpool zu erhalten, der neue Knoten eine Adressenanforderung an den die erste Zelle abdeckenden Leader-Knoten über den in der ersten Zelle erfassten, benachbarten Mitglied-Knoten überträgt, und der Leader-Knoten der ersten Zelle dem neuen Knoten als Antwort über den Mitglied-Knoten einen zu verwaltenden Adressenpool mitteilt.

8. Verfahren nach einem der vorhergehenden Ansprüche, bei dem während der Phase b) einer der zwei Leader-Knoten, die die erste bzw. die zweite Zelle abdecken, an die anderen Leader-Knoten der Partition eine Mitteilung überträgt, um sie über die Nutzung eines neuen Adressenpools durch den neuen Leader-Knoten zu informieren, der die zweite Zelle abdeckt.

9. Verfahren nach einem der vorhergehenden Ansprüche, bei dem, wenn die Gesamtheit der Adressen des Netzwerks in eine Folge von getrennten Adressenpools aufgeteilt ist, und jeder Pool einen Bereich von aufeinanderfolgenden Adressen aufweist, die aufeinanderfolgenden Adressenpools in einer gegebenen Reihenfolge den Leader-Knoten zugeteilt werden, die nacheinander in die Partition aufgenommen werden, und in einer Zelle die aufeinanderfolgenden Adressen des vom Leader-Knoten der Zelle verwalteten Pools in einer gegebenen Reihenfolge den Knoten zugewiesen werden, die nacheinander in die Zelle aufgenommen werden.

10. Verfahren nach einem der vorhergehenden Ansprüche, bei dem in dem Fall, in dem das Netzwerk mindestens zwei voneinander unabhängige Partitionen enthält, die aber vereint werden können, die Erfassung der zwei Partitionen von einem neuen Knoten, der in dem Netzwerk während der Phase a) ankommt, durch die Erfassung von zwei benachbarten Leader-Knoten, die zu zwei unterschiedlichen Partitionen gehören, durchgeführt wird.

11. Verfahren nach Anspruch 9, bei dem, um die zwei Partitionen zu vereinen,
- die Leader-Knoten einer ersten der zwei Partitionen Adressenpools wechseln, indem sie eine Verschiebung von Pools um einen Schritt gleich der Gesamtanzahl von in der zweiten Partition verwendeten Pools durchführen, um nicht von der zweiten Partition verwendete Pools zu verwenden, und in ihren jeweiligen Zellen eine Mitteilung verbreiten, die eine Information über die Gesamtzahl von nach der Vereinigung verwendeten Pools enthält, und
- die Mitglied-Knoten der ersten Partition ihre neue Adresse ausgehend von ihrer Adresse vor der Vereinigung und von der Anzahl von durch die zweite Partition verwendeten Adressenpools bestimmen.

12. Verfahren nach Anspruch 11, bei dem eine Vereinigungsanzeigemitteilung an die Leader-Knoten der ersten Partition gesendet wird, um eine Änderung der Adressen in der ersten Partition zu bewirken, während eine Aktualisierungsmitteilung, die eine Information bezüglich der in der Partition nach Vereinigung verwendeten Adressenpools und eine Information über die Anzahl von Leadern der Partition nach Vereinigung enthält, an die Leader-Knoten der zweiten Partition gesendet wird.

13. Kommunizierendes Objekt, das in ein Netzwerk kommunizierender Objekte aufgenommen werden kann und enthält
• erste funktionale Einrichtungen, die die Aufgabe eines eine Kommunikationszelle abdeckenden Leaders gewährleisten können, wobei ein Leader-Knoten dafür zuständig ist, Adressen eines Adressenpools den Knoten zuzuweisen, die sich in seiner Zelle befinden, und die von zu seiner Zelle gehörenden Mitglied-Knoten kommenden oder für sie bestimmten Mitteilungen zu routen;
• zweite funktionale Einrichtungen, die die Aufgabe eines Mitglieds in einer von einem Leader-Knoten abgedeckten Zelle gewährleisten können;
• erste Konfigurationseinrichtungen, um eine Phase a) der Erfassung eines Leader-Knotens anzuwenden, die angeordnet sind, um
- zu erfassen, ob ein Leader-Knoten in der Umgebung des Objekts vorhanden ist, und
- im Fall der Erfassung eines benachbarten Leader-Knotens eine Adresse im Leader-Knoten zu erhalten und die Aktivierung der zweiten funktionalen Einrichtungen auszulösen,
wobei das Objekt **dadurch gekennzeichnet ist, dass** es enthält
• zweite Konfigurationseinrichtungen, um eine Phase b) der Erfassung eines Mitglied-Knotens anzuwenden, die angeordnet sind, um
- zu erfassen, ob ein Mitglied-Knoten in der Umgebung des Objekts vorhanden ist, und
- im Fall der Erfassung eines benachbarten Mitglied-Knotens einen zu verwaltenden Adressenpool zu erhalten, sich eine Adresse des Pools zuzuweisen und die Aktivierung der ersten funktionalen Einrichtungen auszulösen,
wobei die zweiten Konfigurationseinrichtungen dazu bestimmt sind, nach den ersten Konfigurationseinrichtungen in dem Fall angewendet zu werden, in dem das Objekt keinen Leader-Knoten in seiner Umgebung erfasst hat.

14. Objekt nach Anspruch 13, das außerdem dritten funktionale Einrichtungen enthält, die die Aufgabe eines Gateway für die Kommunikation zwischen zwei Leader-Knoten gewährleisten können und dazu bestimmt sind, in dem Fall aktiviert zu werden, in dem das Objekt, wenn es in der Zelle ist, die von einem ersten Leader-Knoten abgedeckt wird, in seiner Umgebung einen neuen Knoten erfasst, der im Netzwerk ankommt und die Aufgabe eines Leaders übernimmt.

15. Netzwerk von kommunizierenden Objekten, das mehrere Objekte nach einem der Ansprüche 13 und 14 aufweist, die mindestens eine Partition bilden.
